(19) Europäisches Patentamt
European Patent Office
Office européen des brevets

(11) **EP 2 182 380 B1**

(12) **EUROPÄISCHE PATENTSCHRIFT**

(45) Veröffentlichungstag und Bekanntmachung des Hinweises auf die Patenterteilung:
**20.07.2011 Patentblatt 2011/29**

(51) Int Cl.:
***G01S 7/493*** *(2006.01)*    ***G01S 13/93*** *(2006.01)*
***G01S 13/00*** *(2006.01)*    *G01S 13/34* *(2006.01)*

(21) Anmeldenummer: **09171448.5**

(22) Anmeldetag: **28.09.2009**

(54) **Verfahren zur Detektion von Peaküberlagerungen in einem diskreten Spektrum eines Ortungssignals**

Method for detecting peak overlays in a discrete spectrum of a location signal

Procédé de détection de la superposition de pointe dans un spectre discret d'un signal de repérage

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.11.2008 DE 102008043394**

(43) Veröffentlichungstag der Anmeldung:
**05.05.2010 Patentblatt 2010/18**

(73) Patentinhaber: **Robert Bosch GmbH**
**70442 Stuttgart (DE)**

(72) Erfinder:
• **Heilmann, Stefan**
**71229 Leonberg (DE)**
• **Gross, Volker**
**71254 Ditzingen (DE)**
• **Leinbaum, Stephan**
**74189 Weinsberg (DE)**
• **Kuehnle, Goetz**
**71282 Hemmingen (DE)**
• **Bechler, Dirk**
**76185 Karlsruhe (DE)**

(56) Entgegenhaltungen:
• **JULIUS O SMITH III AND XAVIER SERRA: "PARSHL: An Analysis/Synthesis Program for Non-Harmonic Sounds Based on a Sinusoidal Representation" PROCEEDINGS OF THE 1987 INTERNATIONAL COMPUTER MUSIC CONFERENCE, UNIVERSITY OF ILLINOIS AT URBANA-CHAMPAIGN, USA, AUGUST 23-26, 1987,, 1. August 1987 (1987-08-01), Seiten 290-297, XP009130237**

**Beschreibung**

Stand der Technik

Die Erfindung betrifft ein Verfahren zur Detektion von Peaküberlagerungen in einem diskreten Spektrum eines Ortungssignals, bei dem ein im diskreten Spektrum erkannter Peak durch eine stetige Funktion approximiert wird und anhand der Lage des Scheitels der approximierenden Funktion eine Frequenzlinienkorrektur $\delta k$ bestimmt wird.

In Kraftfahrzeugen werden zur Erfassung des Verkehrsumfelds, beispielsweise in Verbindung mit Abstandsregelsystemen und aktiven oder passiven Sicherheitssystemen, häufig Radarsensoren eingesetzt, bei denen die Information über die georteten Objekte in der Frequenz des empfangenen Radarsignals kodiert ist. Beispielsweise wird bei einem FMCW-Radar (Frequency Modulated Continuous Wave) kontinuierlich ein Radarsignal gesendet, dessen Frequenz jedoch rampenförmig moduliert wird. Das an einem Objekt reflektierte und wieder vom Sensor empfangene Signal wird mit dem gesendeten Signal überlagert, so daß man ein Zwischenfrequenzsignal erhält, dessen Frequenz gleich dem Frequenzunterschied zwischen dem gesendeten und dem empfangenen Signal ist. Auf einer steigenden Frequenzrampe nimmt dieser Frequenzunterschied linear mit der Signallaufzeit und folglich mit dem Abstand des georteten Objekts zu. Das Objekt zeichnet sich deshalb als ein Peak bei einer bestimmten Frequenz im Spektrum des Zwischenfrequenzsignals ab. Die Lage dieses Peaks ist allerdings nicht nur vom Objektabstand abhängig, sondern aufgrund des Doppler-Effektes auch von der Relativgeschwindigkeit des Objekts. Für eine eindeutige Bestimmung von Abstand und Relativgeschwindigkeit sind deshalb zwei Messungen mit unterschiedlichen Frequenzrampen erforderlich.

Wenn mehrere Objekte gleichzeitig geortet werden, ist die Zuordnung zwischen den auf den verschiedenen Frequenzrampen erhaltenen Peaks und den Objekten nicht mehr eindeutig. Zur Beseitigung dieser Mehrdeutigkeit ist in der Regel eine zusätzliche Messung mit einer dritten Frequenzrampe erforderlich.

Die Lage (Frequenz) des Scheitelpunkts eines einzelnen Peaks im Spektrum für eine einzelne Frequenzrampe entspricht einer bestimmten Beziehung zwischen Abstand und Relativgeschwindigkeit des betreffenden Objekts und wird deshalb in einem Abstands-Relativgeschwindigkeits-Diagramm durch eine Gerade repräsentiert. Wenn man die Spektren von drei verschiedenen Frequenzrampen auswertet, sollte man für dieses Objekt drei Peaks erhalten, und die entsprechenden Geraden im Diagramm müssen sich theoretisch, wenn man von Meßfehlern und Rauschen absieht, in einem einzigen Punkt schneiden, der dann den Abstand und die Relativgeschwindigkeit des betreffenden Objekts angibt. Typischerweise handelt es sich bei dem Radarsensor um einen Mehrstrahlradarsensor, der mehrere im Azimut winkelversetzte Radarkeulen aussendet, und durch Vergleich der Amplituden und/oder Phasen (komplexe Amplituden) der in den verschiedenen Keulen empfangenen Radarechos läßt sich dann der Azimutwinkel des georteten Objekts zumindest näherungsweise bestimmen.

Die Auswertung des Radarortungssignals wird jedoch erheblich erschwert, wenn in einem Frequenzspektrum zwei Peaks auftreten, die einander beträchtlich überlappen. Zum einen erschweren solche Peaküberlagerungen die Bestimmung des Azimutwinkels, da durch die Überlagerung der Peaks sowohl die Amplitude als auch die Phase des empfangenen Signals verfälscht wird. Darüber hinaus können solche Peaküberlagerungen jedoch auch die Bestimmung der Abstände und Relativgeschwindigkeiten der Objekte erschweren.

Ein wesentlicher Grund besteht darin, daß es sich bei den auszuwertenden Frequenzspektren um diskrete Spektren handelt, deren Definitionsbereich in eine endliche Anzahl von Zonen (sogenannte Frequenzbins) unterteilt ist und die jedem Bin nur einen einzigen Amplitudenwert zuordnen. Das Spektrum besteht somit nicht in einer stetigen Kurve, sondern in einzelnen Punkten, die auf der Frequenzachse gleiche Abstände zueinander haben. Diese Abstände, also die Breite der Bins, begrenzt die Frequenzauflösung des Spektrums und damit die Genauigkeit, mit der die Lagen der Peaks bestimmt werden könnten.

Um diese Genauigkeit zu steigern, ist es bekannt, die drei benachbarten Punkte im Spektrum, die einen Peak repräsentieren, durch eine stetige Funktion zu approximieren, z. B. eine Parabel (Polynom zweiten Grades), deren Parameter in Abhängigkeit von der Form des bei der Abtastung des Ortungssignals verwendeten Abtastfensters so gewählt werden, daß ihre Form der Form eines "idealen" Einzelpeaks entspricht. Die Lage des Scheitels dieser Funktion gibt dann einen genaueren Wert für die Scheitelfrequenz des Peaks an. Im Fall von Peaküberlagerungen führt diese Approximation jedoch zu beträchtlichen Fehlern, sogenannten Fequenzbinfehlern.

Bei sehr eng beieinanderliegenden Peaks kann es sogar vorkommen, daß die beiden Peaks im diskreten Spektrum überhaupt nicht mehr getrennt werden können. In dem Fall bleibt die Peaküberlagerung oft gänzlich unerkannt, und bei der weiteren Auswertung kann die Verfälschung der Meßergebnisse nicht in Rechnung gestellt werden.

Die Radarmessungen werden zyklisch wiederholt, und in weiteren Stufen der Signalauswertung werden die in aufeinanderfolgenden Meßzyklen erhaltenen Resultate auf Konsistenz und Plausibilität geprüft, und mit Hilfe von Filterprozeduren und anderen statistischen Verfahren wird versucht, letztlich ein Resultat zu erhalten, das das tatsächliche Verkehrsumfeld möglichst wirklichkeitsgetreu abbildet. Dabei ist es wesentlich, daß die Verläßlichkeit der bei einzelnen Messungen erhaltenen Ergebnisse einigermaßen zuverlässig eingeschätzt werden kann. In dem Zusammenhang führt eine nicht erkannte Peaküberlagerung jedoch zu einer Fehleinschätzung der Verläßlichkeit der Meßergebnisse und damit möglicherweise zu einer falschen Beurteilung der Verkehrssituation.

Daß eine Peaküberlagerung vorliegt, sollte im Prinzip zwar daran zu erkennen sein, daß in mindestens einem der Spektren ein Peak fehlt, doch läßt sich bei gleichzeitiger Ortung von mehr als zwei Zielen nicht entscheiden, welcher der gefundenen Peaks in Wahrheit aus einer Überlagerung von zwei getrennten Peaks besteht.

In JULIUS O SMITH III AND XAVIER SERRA: "PARSHL: An Analysis/Synthesis Program for Non-Harmonic Sounds Based on a Sinusoidal Representation" PROCEEDINGS OF THE 1987 INTERNATIONAL COMPUTER MUSIC CONFERENCE, UNIVERSITY OF ILLINOIS AT URBANA-CHAMPAIGN, USA, AUGUST 23-26, 1987" 1. August 1987 (1987-08-01), Seiten 290-297, XP009130237 wird ein Verfahren zur Analyse eines Spektrums mit approximierenden Funktionen beschrieben.

Offenbarung der Erfindung

Aufgabe der Erfindung ist es, ein Verfahren anzugeben, mit dem sich Peaküberlagerungen auf einfache und verläßliche Weise detektieren lassen.

Diese Aufgabe wird erfindungsgemäß durch ein Verfahren der eingangs genannten Art gelöst, das die folgenden Schritte aufweist:

- anhand der approximierenden Funktion wird ein auf den Scheitelwert $y_p$ des Peaks normiertes Breitenmaß $a_n$ des Peaks bestimmt,
- in einem $a_n$-$\delta k$-Diagramm wird ein durch das Öffnungsmaß $a_n$ und die Frequenzlinienkorrektur k definierter Punkt $(a_n, \delta k)$ aufgesucht und ein Abstand $\Delta$ bestimmt, den dieser Punkt zu einer für Einzelpeaks charakteristischen Kennlinie aufweist, und
- die Wahrscheinlichkeit, daß eine Peaküberlagerung vorliegt, wird anhand des Abstands $\Delta$ ermittelt.

Dieses Verfahren beruht auf der Feststellung, daß bei idealen, unverfälschten und unverrauschten Signalen eine eindeutig bestimmte Beziehung zwischen dem Breitenmaß, das sich aus der approximierenden Funktion (z. B. Parabel) herleiten läßt, und der Frequenzlinienkorrektur $\delta k$ besteht. Diese Beziehung läßt sich berechnen und in einen $a_n$-$\delta k$-Diagramm als Kennlinie darstellen. Wenn es sich bei einem Peak um einen Einzelpeak handelt, der nicht mit einem anderen Peak überlagert ist, sollte deshalb der durch das Wertepaar $(a_n, \delta k)$ gegebene Punkt auf der Kennlinie liegen oder zumindest in der Nähe dieser Kennlinie, wenn man gewisse Signalverfälschungen durch Rauschen und andere Einflüsse in Rechnung stellt. Der Abstand zwischen dem für einen bestimmten Peak gefundenen Punkt und der Kennlinie stellt deshalb ein Maß für die Wahrscheinlichkeit dafür dar, daß es sich bei diesem Peak in Wahrheit um eine Überlagerung von zwei Peaks handelt und dementsprechend - z. B. im Falle eines Radarortungssignals - die erhaltenen Ergebnisse für den Abstand, die Relativgeschwindigkeit und den Azimutwinkel des Objekts unzuverlässig sind.

Das Verfahren ist indessen nicht nur bei Radarortungssignalen anwendbar, sondern z. B. auch bei Ortungssignalen von Ultraschallsensoren und dergleichen.

Je nach Wahl des Abtastfensters, das zum Samplen des Ortungssignals verwendet wird, kann als approximierende Funktion anstelle einer Parabel auch eine andere "peak-ähnliche" Funktion, z. B. eine Gauß-Funktion, verwendet und die Definition des normierten Breitenmaßes entsprechend angepaßt werden (z. B. basierend auf der Definition der standardabweichung).

Gegenstand der Erfindung ist außerdem ein Fahrerassistenzsystem mit einem Ortungssensor, insbesondere Radarsensor, und einer Einrichtung zur Auswertung des Ortungssignals, in der das oben beschriebene Verfahren implementiert ist.

Kurze Beschreibung der Zeichnungen

Ein Ausführungsbeispiel der Erfindung ist in den Zeichnungen
dargestellt und in der nachfolgenden Beschreibung näher erläutert.
Es zeigen:

Figur 1          eine Skizze eines Kraftfahrzeugs mit einem Radarsensor, der zwei vorausfahrende Fahrzeuge ortet;

Figur 2          ein Amplituden-Zeit-Diagramm eines idealisierten Radarortungssignals;

Figur 3          ein Frequenzspektrum für das Radarortungssignal nach Figur 2;

Figuren 4 und 5    Beispiele für Frequenzspektren mit Peaküberlagerungen;

Figuren 6 und 7    Diagramme zur Erläuterung eines Interpolationsverfahrens bei der Auswertung des Frequenzspektrums;

Figur 8    ein Breitenmaß-Frequenzlinienkorrektur- Diagramm; und

Figur 9    ein Flußdiagramm für das erfindungsgemäße Verfahren.

Ausführungsform der Erfindung

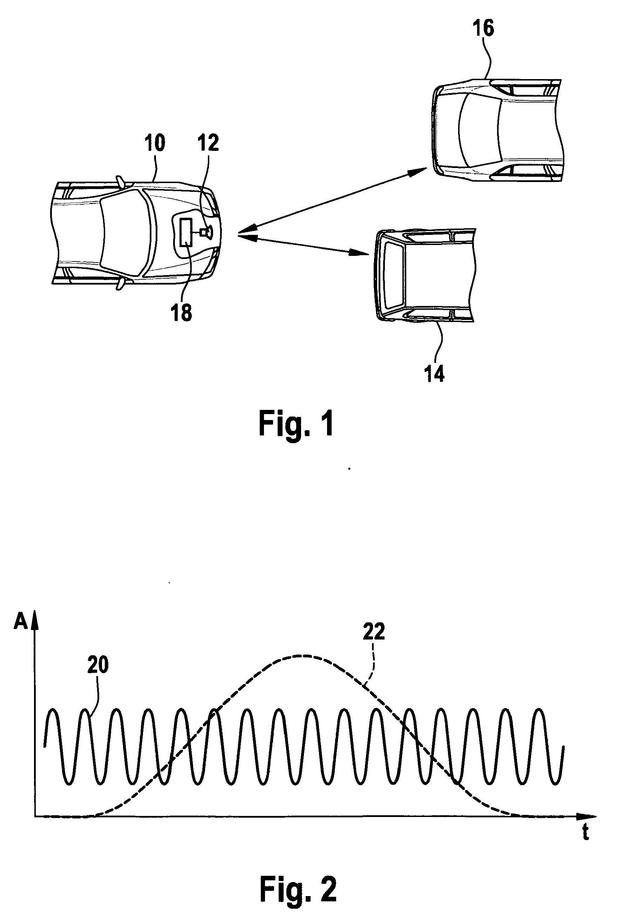

In Figur 1 ist schematisch die Frontpartie eines Kraftfahrzeugs 10 gezeigt, das mit einem Fahrerassistenzsystem ausgerüstet ist, beispielsweise einem Abstandsregelsystem (ACC; Adaptive Cruise Control). Wesentliche Bestandteile dieses Systems sind ein Radarsensor 12, mit dem Objekte wie z. B. vorausfahrende Fahrzeuge 14, 16 geortet werden können, und eine elektronische Auswerteeinheit 18 zur Auswertung des Radarortungssignals.

Als Beispiel soll hier angenommen werden, daß es sich bei dem Radarsensor 12 um ein FMCW-Radar handelt. Die Frequenz des von dem Radarsensor emittierten Signals wird rampenförmig moduliert, und das an den Fahrzeugen 14, 16 reflektierte und wieder vom Sensor empfangene Signal wird dort mit einem Teil des gesendeten Signals gemischt, so daß man ein Zwischenfrequenzsignal erhält, das dann mit einer geeigneten Fensterfunktion gesampled und durch Schnelle Fourier-Transformation (FFT) in ein Frequenzspektrum umgewandelt wird.

Generell sollte sich in diesem Spektrum jedes geortete Objekt, also jedes der Fahrzeuge 14, 16, in der Form eines einzelnen Peaks abzeichnen. Bei gleicher Relativgeschwindigkeit der Fahrzeuge 14, 16 relativ zum Fahrzeug 10 ist der Frequenzunterschied zwischen dem gesendeten und dem empfangenen Signal bei einer steigenden Frequenzrampe um so größer, je größer die Signallaufzeit ist. Dementsprechend ist der zu einem Objekt gehörende Peak im Zwischenfrequenzspektrum zu höheren Frequenzen verschoben, wenn der Abstand des Objekts größer ist. Im hier gezeigten Beispiel sollte deshalb der Peak für das Fahrzeug 16 bei einer höheren Frequenz liegen als der Peak für das Fahrzeug 14.

Nun ist allerdings die Frequenz des am Fahrzeug 14 oder 16 reflektierten Radarechos und damit auch die Frequenz des Zwischenfrequenzsignals aufgrund des Doppler-Effekts auch von der Relativgeschwindigkeit des betreffenden Fahrzeugs abhängig. Je schneller sich das Fahrzeug 14, 16 vom Fahrzeug 10 entfernt, desto stärker ist der Peak zu kleineren Frequenzen verschoben. Wenn nun das Fahrzeug 16 ein überholendes Fahrzeugs ist, dessen Geschwindigkeit größer ist als die des Fahrzeugs 14, kann deshalb der Fall eintreten, daß sich der durch die größere Laufzeit bedingte Effekt und der durch die größere Relativgeschwindigkeit bedingte Effekt gerade aufheben, so daß beide Peaks im Spektrum zu einem einzigen Peak verschmelzen, was die weitere Auswertung des Radarortungssignals erheblich erschwert und das Auswertungsergebnis unzuverlässiger macht.

Im folgenden soll deshalb ein Verfahren beschrieben werden, mit dem diese Situationen, sogenannte Peaküberlagerungen, detektiert werden können.

In Figur 2 ist die Amplitude A eines sinusförmigen Zwischenfrequenzsignals 20 gegen die Zeit t aufgetragen. Das hier gezeigte Zwischenfrequenzsignal 20 entspricht dem Idealfall, daß ein einzelnes Objekt geortet wird, dessen Abstand und Relativgeschwindigkeit konstant sind, so daß auch die Frequenz des Zwischenfrequenzsignals konstant ist. Dieses Signal wird im Radarsensor 12 mit einem geeigneten Zeittakt gesampled, mit einer geeigneten Fensterfunktion 22 (Abtastfenster) gewichtet und dann durch Schnelle Fourier-Transformation in ein diskretes Frequenzspektrum umgewandelt.

Bei einigen Auswertungsverfahren wird die Fourier-Transformation auf den Betrag der Amplitude angewandt, bei anderen Verfahren auf das Betragsquadrat. Das hier vorgeschlagene Verfahren zur Detektion von Peaküberlagerungen ist in beiden Fällen anwendbar.

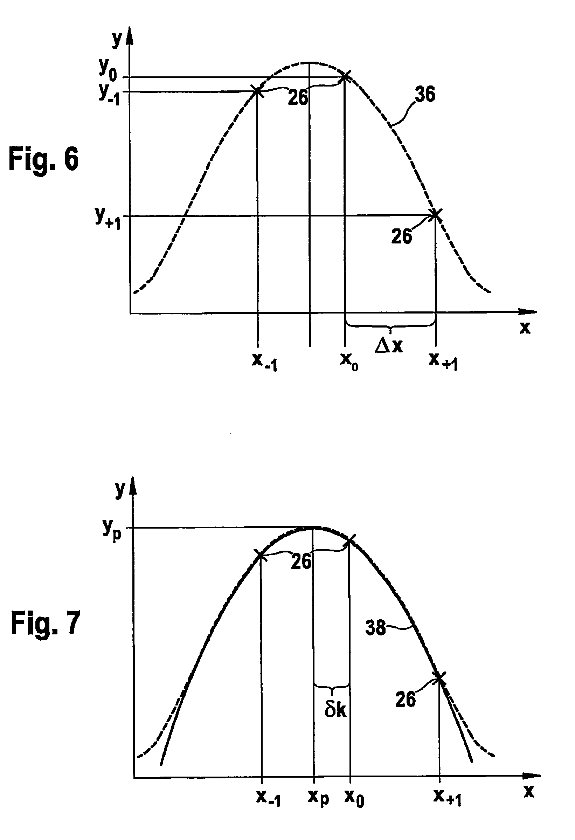

Im Spektrum wird das Zwischenfrequenzsignal 20 durch einen Peak repräsentiert, dessen Form der Fourier-Transformierten der Fensterfunktion 22 entspricht. Diese Fensterfunktion wird im hier betrachteten Beispiel so gewählt, daß der Peak sich gut durch eine Parabel approximieren läßt, wie weiter unten mit Bezug auf Figuren 6 und 7 noch näher erläutert werden wird.

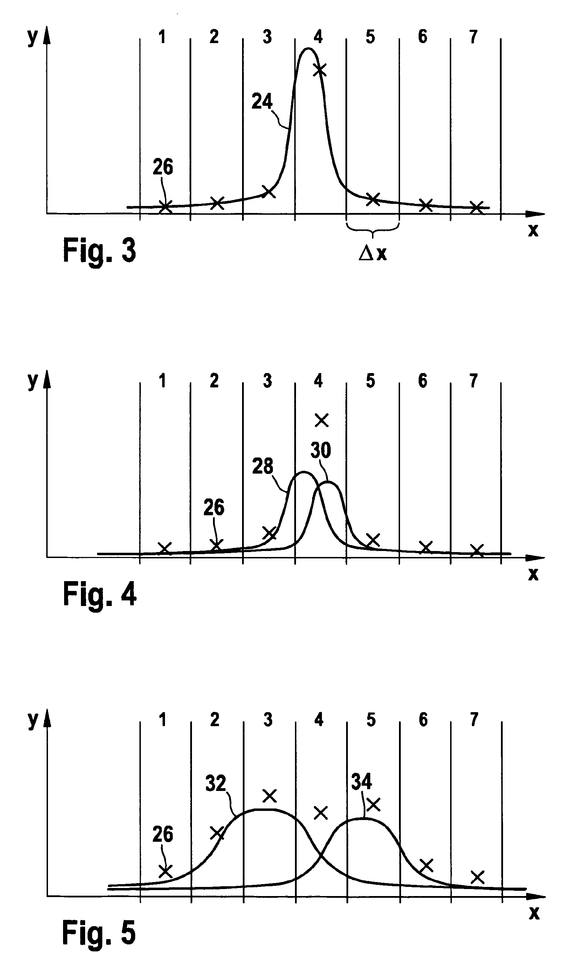

Figur 3 zeigt ein Frequenzspektrum für ein Zwischenfrequenzsignal, das aus einer (phasengleichen) Überlagerung von zwei Peaks 28, 30 resultiert, die in Fig. 4 getrenntdargestellt sind. Die Frequenzachse ist in Figur 3 mit x bezeichnet, und die Amplituden-Achse mit y. Die Fourier-Transformierte des gewichteten Zwischenfrequenzsignals ist in Figur 3 durch eine stetige Kurve 24 angegeben, die einen Peak bei einer bestimmten Frequenz bildet.

Das in Figur 3 gezeigte Frequenzspektrum ist in der Auswerteeinheit 18 jedoch nicht in der Form der stetigen Kurve 24 verfügbar, sondern lediglich in der Form diskreter Meßpunkte 26. Die x-Achse ist in eine Vielzahl gleich breiter Zonen, sogenannter Frequenzbins, aufgeteilt, die hier mit 1 - 7 numeriert sind (in der Praxis ist die Anzahl der Zonen beträchtlich größer) und deren Breite mit $\Delta x$ bezeichnet ist. Jeder der Meßpunkte 26 liegt in der Mitte eines solchen Frequenzbins.

In dem durch die Meßpunkte 26 gebildeten diskreten Spektrum ist ein Peak daran zu erkennen, daß für einen Meßpunkt der y-Wert größer ist als für seine beiden Nachbarn. Im in Figur 3 gezeigten Beispiel läge somit ein Peak in dem Bin 4 vor. Legt man jedoch nach dem üblichen Approximationsverfahen eine Parabel durch die drei Meßpunkte in den Bins 3, 4 und 5, so ergibt sich nur eine sehr schlechte Übereinstimmung mit der Kurve 24, die das "wahre" Spektrum angibt.

Das liegt daran, daß hier in Wahrheit zwei Peaks 28, 30 überlagert sind, die von verschiedenen Objekten herrühren, einander jedoch so weit überlappen, daß sie im diskreten Spektrum (Meßpunkte 26) zu einem einzigen Peak verschmelzen. In Figur 4 repräsentieren die Meßpunkte 26 jeweils die Summen der zu den einzelnen Peaks 28, 30 gehörenden Signale.

Figur 5 zeigt ein Beispiel, bei dem zwei Peaks 32, 34 zwar so weit auseinander liegen, daß sie im diskreten Spektrum (Meßpunkte 26) in zwei getrennte Peaks in den Bins 3 und 5 aufgelöst werden können, die Peaks jedoch immer noch in einem beträchtlichen Ausmaß überlappen, so daß bei der Parabelapproximation erhebliche Fehler auftreten und die bei der weiteren Auswertung daraus abzuleitenden Meßgrößen für den Abstand, die Relativgeschwindigkeit und den Azimutwinkel des Objekts beträchtlich verfälscht werden.

Die in Figuren 3 bis 5 gezeigten diskreten Spektren geben die Lage eines Peaks jeweils nur auf ein Bin genau an, also mit einer Auflösung $\Delta x$. Figuren 6 und 7 illustrieren ein Interpolationsverfahren, mit dem sich die Frequenzlage eines Peaks 36 genauer bestimmen läßt. Zur groben Bestimmung der Lage des Peaks wird ein Meßpunkt gesucht, dessen y-Wert größer ist als der der beiden Nachbarn. Die x-Koordinate dieses Punktes soll mit $x_0$ bezeichnet werden, und die Koordinaten der Nachbarn mit $x_{-1}$ bzw. $x_{+1}$. Der Abstand $x_{+1} - x_0$ entspricht dann der Breite $\Delta x$ eines Frequenzbins, ebenso der Abstand $x_0 - x_{-1}$. Für die Meßpunkte 26 gilt dann:

$$y_0 = y(x_0)$$

$$y_{-1} = y(x_{-1}) = y(x_0 - \Delta x)$$

$$y_{+1} = y(x_{+1}) = y(x_0 + \Delta x).$$

Wie in Figur 7 gezeigt ist, läßt sich nun der Peak 36 durch eine Parabel 38 approximieren, d. h., durch ein Polynom zweiten Grades mit der allgemeinen Funktionsvorschrift:

$$y(x) = a(x - x_0)^2 + b(x - x_0) + y_0.$$

Darin werden die Koeffizienten a und b so gewählt, daß die Parabel 38 durch alle drei Meßpunkte 26 geht. Diese Koeffizienten lassen sich berechnen, indem man das folgende Gleichungssystem löst:

$$y_{-1} = a \Delta x^2 - b \Delta x + y_0$$

$$y_{+1} = a \Delta x^2 + b \Delta x + y_0.$$

Für a erhält man also:

$$a = (y_{+1} - 2y_0 + y_{-1})/2\Delta x^2.$$

Entsprechend kann man das Gleichungssystem auch nach b auflösen.

Aus den bekannten Koeffizienten läßt sich nun der Scheitelpunkt $(x_p, y_p)$ der Parabel 38 berechnen:

$$x_p = x_0 - (\Delta x/2)(y_{+1} - y_{-1})/(y_{+1} - 2y_0 + y_{-1})$$

$$y_p = y_0 - (1/8)(y_{+1} - y_{-1})^2/(y_{+1} - 2y_0 + y_{-1}).$$

Da die Parabel 38 eine gute Approximation für den Peak 36 darstellt, läßt sich somit die Frequenzlage $x_p$ dieses Peaks genauer bestimmen.

Die Differenz $x_p - x_0$ wird auch als Frequenzlinienkorrektur $\delta k$ bezeichnet.

$$\delta k = - (\Delta x/2)(y_{+1} - y_{-1})/(y_{+1} - 2y_0 + y_{-1})$$

Der Koeffizient a gibt an, wie weit sich die Parabel 38 öffnet. Je kleiner der Betrag von a ist, desto weiter öffnet sich die Parabel. In diesem Sinne gibt somit dieser Koeffizient a Auskunft über die Breite des Peaks 36.

Von besonderem Interesse für das hier vorgeschlagene Verfahren zur Detektion von Peaküberlagerungen ist das normierte Breitenmaß $a_n$, das man erhält, indem man den Koeffizienten a auf die Scheitelhöhe $y_p$ des Peaks normiert:

$$a_n = a/y_p.$$

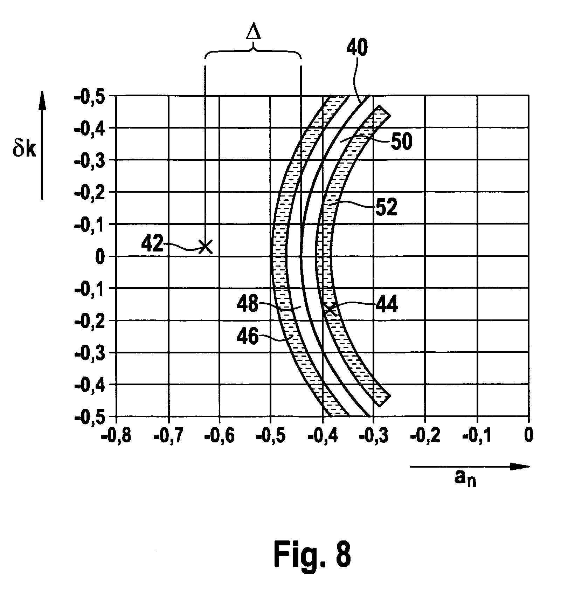

Es stellt sich nämlich heraus, daß - jedenfalls für eine gegebene Fensterfunktion 22 - für einen einfachen, annähend einem sinusförmigen Signal entsprechenden Peak, dem keine weiteren Peaks überlagert sind, eine bestimmte Beziehung zwischen dem normierten Breitenmaß a und der n Frequenzlinienkorrektur $\delta k$ besteht. Zur Illustration dieser Beziehung zeigt Figur 8 ein $a_n$-$\delta k$-Diagramm. Es zeigt sich, daß in diesem Diagramm alle Einzelpeaks durch Punkte repräsentiert werden, die auf einer bestimmten Kennlinie 40 liegen.

Für Peaküberlagerungen, wie sie in Figuren 4 und 5 dargestellt sind, liegen die entsprechenden Punkte dagegen abseits der Kennlinie 40, wie beispielsweise die Punkte 42 und 44 in Figur 8. Generell gilt, je weiter die Punkte 42, 44 von der Kennlinie 40 entfernt sind, desto größer ist die Wahrscheinlichkeit, daß eine Peaküberlagerung vorliegt, und desto stärker ist das Ausmaß der Überlappung.

Der Abstand $\Delta$ zwischen den Punkten 42 oder 44 und der Kennlinie 40 kann längs der $a_n$-Achse gemessen werden. In einer anderen Ausführungsform werden parallel zu der Kennlinie 40 bestimmte Abstandszonen 46, 48, 50, 52 definiert, und dem untersuchten Punkt wird ein Abstandsmaß $\Delta$ in Abhängigkeit von der Zone zugewiesen, in der er sich befindet.

Dieses Verfahren ermöglicht es, mit geringem Rechenaufwand und schon in einem sehr frühen Stadium des Auswertungsprozesses Peaküberlagerungen relativ zuverlässig zu erkennen.

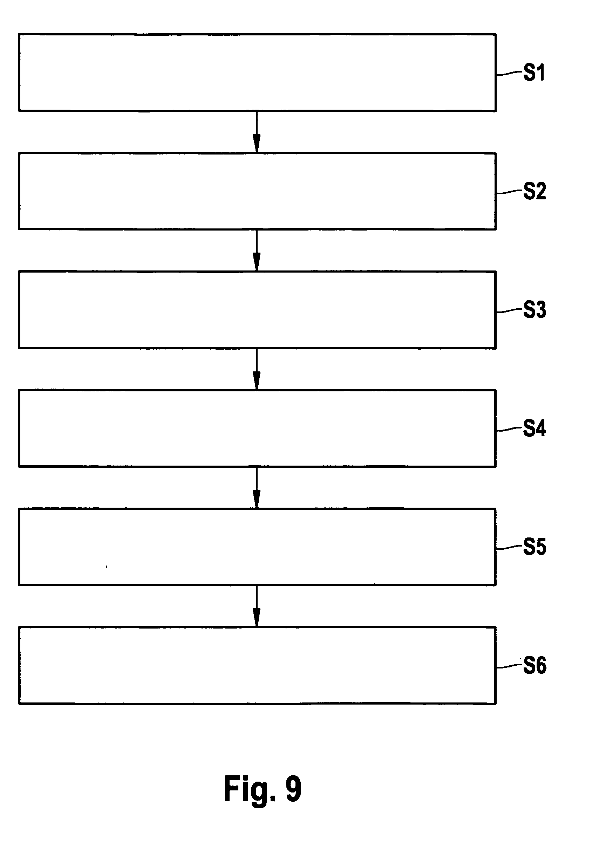

Die wesentlichen Schritte des Verfahrens sind in Figur 9 noch einmal zusammengefaßt. In Schritt S1 wird das Frequenzspektrum nach Peaks durchsucht. Dabei brauchen nur Tripel von je drei benachbarten Meßpunkten betrachtet zu werden, und ein Peak befindet sich dort, wo der y-Wert des mittleren Punktes größer ist als der der beiden Nachbarn. Da mit Hilfe des Abstandsmaßes $\Delta$ auch Peaküberlagerungen der in Figur 5 gezeigten Art erkennbar sind, bei denen die Peaks auch im diskreten Spektrum noch aufgelöst werden können, ist es in Schritt S1 nicht erforderlich, die Analyse um eine Suche nach komplexeren Mustern in vier oder mehr Meßpunkten zu erweitern, um dadurch einen Hinweis auf Peaküberlagerungen zu erhalten.

In Schritt S2 wird der Peak durch eine Parabel approximiert. Diese Approximation wird zumindest zur Bestimmung des Koeffizienten a benutzt.

In Schritt S3 werden der Scheitelwert $y_p$ und die Frequenzlinienkorrektur $\delta k$ berechnet.

In Schritt S4 wird dann anhand des Koeffizienten a der Parabelfunktion und anhand des Scheitelwertes $y_n$ das normierte Breitenmaß a berechnet. Anschließend wird in Schritt S5 der n Abstand $\Delta$ des Punktes $(a_n, \delta k)$ von der Kennlinie 40 im Diagramm gemäß Figur 8 bestimmt.

Anhand dieses Abstands $\Delta$ läßt sich entscheiden, ob eine Peaküberlagerung vorliegt oder nicht. Im hier gezeigten Beispiel wird in einem nachfolgenden Schritt S6 ein Qualitätsparameter Q bestimmt, der eine monoton fallende Funktion des Abstands $\Delta$ ist und beispielsweise im Intervall [0, 1] variiert. Je kleiner der Parameter Q ist, desto größer ist die Wahrscheinlichkeit, daß es sich bei dem gesuchten Peak um eine Überlagerung mehrerer Peaks handelt.

Im Verlauf der weiteren Auswertung des Radarortungssignals ist diese Information z. B. hilfreich, wenn bei einem FMCW-Radar anhand der Spektren für mehrere Frequenzrampen eine Zuordnung zwischen den Peaks und den Objekten vorgenommen werden muß. Wenn erkannt wird, daß es sich bei einem Peak in Wahrheit um eine Überlagerung von zwei Peaks handelt, so ist es durch Abgleichen mit den Spektren, die für die anderen Frequenzrampen erhalten wurden, möglich, jeden der beiden überlagerten Peaks einem andern Objekt zuzuordnen.

Ein niedriger Wert des Qualitätsparameters Q deutet außerdem darauf hin, daß die anhand der Frequenz dieses Peaks berechneten Werte für den Abstand und die Relativgeschwindigkeit eines Objekts und ebenso die anhand der Phasenbeziehungen berechneten Azimutwinkelwerte mit hoher Wahrscheinlichkeit stark fehlerbehaftet sind, so daß es zweckmäßig ist, diesen Daten bei der weiteren Auswertung und beim Abgleich mit früher oder später erhaltenen Objektdaten, der sogenannten Objektplausibilisierung, ein geringeres Gewicht zu geben.

**Patentansprüche**

1. Verfahren zur Detektion von Peaküberlagerungen in einem diskreten Spektrum eines Ortungssignals, bei dem ein im diskreten Spektrum erkannter Peak (36) durch eine stetige Funktion approximiert wird und anhand der Lage des Scheitels $(x_p, y_p)$ der approximierenden Funktion eine Frequenzlinienkorrektur $\delta k$ bestimmt wird, **dadurch gekennzeichnet, daß** anschließend die folgenden Schritte ausgeführt werden:

   - anhand der approximierenden Funktion wird ein Breitenmaß $a_n$ des Peaks bestimmt,
   - in einem $a_n$-$\delta k$-Diagramm wird ein durch das Breitenmaß $a_n$ und die Frequenzlinienkorrektur $\delta k$ definierter Punkt $(a_n, \delta k)$ aufgesucht und ein Abstand $\Delta$ bestimmt, den dieser Punkt zu einer für ungestörte Einzelpeaks charakteristischen Kennlinie (40) aufweist, und
   - die Wahrscheinlichkeit, daß eine Peaküberlagerung vorliegt, wird anhand des Abstands $\Delta$ ermittelt.

2. Verfahren nach Anspruch 1, **dadurch gekennzeichnet, daß** das Breitenmaß $a_n$ auf den Scheitelwert $y_p$ der approximierenden Funktion normiert wird.

3. Verfahren nach Anspruch 2, **dadurch gekennzeichnet, daß** die approximierende Funktion ein Polynom zweiten Grades ist und das normierte Breitenmaß $a_n$ bestimmt wird, indem der Koeffizient "a" des quadratischen Terms des approximierenden Polynoms durch den Scheitelwert $y_p$ dieses Polynoms dividiert wird.

4. Fahrerassistenzsystem für Kraftfahrzeuge, mit einem Sensor (12) und einer Auswerteeinheit (18) zur Auswertung des vom Sensor gelieferten Ortungssignals, **dadurch gekennzeichnet, daß** in der Auswerteeinheit (18) das Verfahren nach Anspruch 1 oder 2 implementiert ist.

5. Fahrerassistenzsystem nach Anspruch 4, **dadurch gekennzeichnet, daß** der Sensor (12) ein Radarsensor ist.

**Claims**

1. Method for detecting peak overlays in a discrete spectrum of a location signal, in which a peak (36) which is detected in the discrete spectrum is approximated by a continuous function and a frequency line correction $\delta k$ is determined on the basis of the position of the apex of $(x_p, y_p)$ of the approximating function, **characterized in that** the following steps are subsequently carried out:

   - a width measure $a_n$ of the peak is determined on the basis of the approximating function,

- a point ($a_n$, $\delta k$) which is defined by the width measure $a_n$ and the frequency line correction $\delta k$ is searched for in an $a_n$-$\delta k$ diagram and a distance $\Delta$ between this point and a characteristic curve (40) which is characteristic of undisturbed individual peaks is determined, and
- the probability of a peak overlay being present is determined on the basis of the distance $\Delta$.

2. Method according to Claim 1, **characterized in that** the width measure $a_n$ is standardized to the apex value $y_p$ of the approximated function.

3. Method according to Claim 2, **characterized in that** the approximating function is a second degree polynomial, and the standardized width measure $a_n$ is determined by dividing the coefficient "a" of the quadratic term of the approximating polynomial by the apex value $y_p$ of this polynomial.

4. Driver assistance system for motor vehicles, having a sensor (12) and an evaluation unit (18) for evaluating the locating signal which is supplied by the sensor, **characterized in that** the method according to Claim 1 or 2 is implemented in the evaluation unit (18).

5. Driver assistance system according to Claim 4, **characterized in that** the sensor (12) is a radar sensor.


**Revendications**

1. Procédé de détection de superpositions de pointe dans un spectre discret d'un signal de repérage, dans lequel une pointe (36) localisée dans le spectre discret peut être lissée à l'aide d'une fonction constante et dans lequel une correction de ligne de fréquence $\delta k$ est déterminée à l'aide de la position de l'apex ($x_p$, $y_p$) de la fonction de lissage, **caractérisé en ce que** les étapes suivantes sont ensuite mises en oeuvre :

- détermination d'une dimension de largeur $a_n$ de la pointe à l'aide de la fonction de lissage ;
- recherche d'un point ($a_n$, $\delta_k$) défini par la dimension de largeur $a_n$ et la correction de ligne de fréquence $\delta k$ dans un diagramme $a_n$-$\delta k$ et détermination d'un écartement $\Delta$ comprenant ce point pour former une courbe caractéristique (40) caractéristique d'une pointe unique non troublée ; et
- détermination de la vraisemblance de la présence d'une superposition de pointe à l'aide de l'écartement $\Delta$.

2. Procédé selon la revendication 1, **caractérisé en ce que** la dimension de largeur $a_n$ est lissée pour atteindre la valeur d'apex $y_p$ de la fonction de lissage.

3. Procédé selon la revendication 2, **caractérisé en ce que** la fonction de lissage est un polynôme de deuxième degré et la dimension de largeur $a_n$ lissée est déterminée en divisant le coefficient « a » du terme quadratique du polynôme lissé par la valeur d'apex $y_p$ de ce polynôme.

4. Système de conduite assistée pour véhicules automobiles, avec un capteur (12) et une unité d'analyse (18) pour analyser le signal de repérage envoyé par le capteur, **caractérisé en ce que** le procédé selon la revendication 1 ou 2 est mis en place dans l'unité d'analyse (18).

5. Système de conduite assistée selon la revendication 4, **caractérisé en ce que** le capteur (12) est un capteur radar.

**Fig. 1**

**Fig. 2**

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **JULIUS O SMITH III ; XAVIER SERRA.** PARSHL: An Analysis/Synthesis Program for Non-Harmonic Sounds Based on a Sinusoidal Representation. *PROCEEDINGS OF THE 1987 INTERNATIONAL COMPUTER MUSIC CONFERENCE,* 01. August 1987, 290-297